# EUROPÄISCHE PATENTSCHRIFT

(11) **EP 2 425 149 B1**
(45) Veröffentlichungstag und Bekanntmachung des Hinweises auf die Patenterteilung: **11.06.2014**
(21) Anmeldenummer: 10717512.7
(22) Anmeldetag: 12.04.2010
(51) Int. Cl.: F16F 15/134

(54) **SCHWINGUNGSDÄMPFER**
VIBRATION DAMPER
AMORTISSEUR DE VIBRATIONS

(30) Priorität: 27.04.2009 DE 102009019071; 18.02.2010 DE 102010008361
(43) Veröffentlichungstag der Anmeldung: 07.03.2012
(73) Patentinhaber: Schaeffler Technologies GmbH & Co. KG, 91074 Herzogenaurach (DE)
(72) Erfinder: MENDE, Hartmut, 77815 Bühl (DE)
(86) Internationale Anmeldenummer: PCT/DE2010/000416
(87) Internationale Veröffentlichungsnummer: WO 2010/127653

(56) Entgegenhaltungen:
- EP-A2- 1 666 764
- WO-A2-2007/006254
- WO-A2-2007/006255
- DE-A1- 4 117 582
- DE-A1- 4 340 175
- DE-A1-102006 030 136
- DE-A1-102008 023 361

## Beschreibung

Die Erfindung betrifft einen Schwingungsdämpfer, angeordnet an einer Antriebseinheit mit einer Antriebswelle, mit zwei entgegen der Wirkung mehrerer, über den Umfang angeordneter Energiespeicher relativ verdrehbaren Schwungmassen, wobei eine erste der Schwungmassen mehrere, eine Ringkammer zur Aufnahme der Energiespeicher bildende, miteinander verbundene Scheibenteile und eine zweite der Schwungmassen mehrere, von radial innen in die Ringkammer eingreifende, in Umfangsrichtung auf die Energiespeicher einwirkende Beaufschlagungseinrichtungen für die Energiespeicher aufweist.

Derartige Schwingungsdämpfer, beispielsweise Zweimassenschwungräder (ZMS) und Zweimassendämpfer (ZMD) sind in verschiedenen Ausführungsformen bekannter Stand der Technik. Beispielsweise zeigt die DE 41 17 582 A1 und die DE 10 2008 023 361 A1 einen Torsionsschwingungsdämpfer mit zwei Schwungmassen, von denen die erste aus eine Ringkammer bildenden Scheibenteilen gebildet ist, in denen in Umfangsrichtung angeordnete Energiespeicher untergebracht sind. An der zweiten Schwungmasse ist ein ringförmiges Flanschteil befestigt, das zwei radial erweiterte Arme aufweist, die in einen Freiraum zwischen den beiden die Ringkammer bildenden Scheibenteilen radial erweitert sind und die Beaufschlagungseinrichtungen der Energiespeicher bilden. Das als voller Kreisring ausgebildete Flanschteil erfordert einen hohen Materialeinsatz und große Härtewerkzeuge. Der Zahnkranz wie Anlasserzahnkranz ist auf einer Zusatzmasse, die auf einen ringförmigen axialen Ansatz eines die Ringkammer bildenden Scheibenteils aufgezogen ist, zentriert.

Aufgabe der Erfindung ist die vorteilhafte Weiterbildung von Schwingungsdämpfem insbesondere vor dem Hintergrund einer kostengünstigen Fertigung und einer verbesserten Fertigungsqualität.

Die Aufgabe wird durch einen Schwingungsdämpfer, angeordnet an einer Antriebseinheit mit einer Antriebswelle, mit zwei entgegen der Wirkung mehrerer, über den Umfang angeordneter Energiespeicher relativ verdrehbaren Schwungmassen gelöst, wobei eine erste der Schwungmassen mehrere, eine Ringkammer zur Aufnahme der Energiespeicher bildende, miteinander verbundene Scheibenteile und eine zweite der Schwungmassen mehrere, von radial innen in die Ringkammer eingreifende, in Umfangsrichtung auf die Energiespeicher einwirkende Beaufschlagungseinrichtungen aufweist und jeweils eine Beaufschlagungseinrichtung aus einem von mehreren über den Umfang verteilten und auf der anderen Schwungmasse aufgenommenen Flanschsegmenten gebildet ist. Durch die Trennung eines ringförmigen Flanschteils mit radial erweiterten Armen zur Bildung der Beaufschlagungseinrichtungen in mehrere einzelne Flanschsegmente wird eine hohe Materialeinsparungsquote erzielt, da die Flanschsegmente im Falle eines Stanzens auf dem Bandmaterial materialsparend aneinander gelegt werden können und der Stanzabfall verringert wird. Weiterhin können die für die zumindest im Bereich der Beaufschlagungsbereiche gehärteten Flanschsegmente kleiner dimensionierten Härtevorrichtungen verwendet werden. Die Flanschsegmente sind im Vergleich zu einem ringförmigen Flanschteil einfacher und geometrisch mit einem größeren Freiheitsgrad ausgestattet, so dass die Arme wie Beaufschlagungseinrichtungen in einer entsprechenden Auslegung des Schwingungsdämpfers vor der Befestigung an der zweiten Schwungmasse in die entsprechende Bauraumsituation der Scheibenteile eingefädelt werden können. Die zweite Schwungmasse kann beispielsweise aus Stahl hergestellt, beispielsweise gestanzt und/oder entsprechend umformend gestaltet sein, wobei die Flanschsegmente mit dieser verschweißt, vernietet oder an dieser ausgebildete Nietwarzen aufgenommen sein können. Bei einer Schwungmasse aus Guss sind die Flanschsegmente beispielsweise mit dieser vernietet. Die Flanschsegmente sind dabei im Wesentlichen derart ausgebildet, dass pro Flanschteil ein radial gegenüber in beide Umfangsrichtungen ausgerichteten Flügeln oder Laschen zur Befestigung des Flanschsegments an der zweiten Schwungmasse erweiterter Arm mit den umfangsseitigen Beaufschlagungseinrichtungen wie Beaufschlagungsflächen vorgesehen ist.

Durch die Verwendung von Flanschsegmenten können die Beaufschlagungseinrichtungen jeweils in einen im Wesentlichen axial ausgerichteten Bereich eines Scheibenteils vorgesehene Ausnehmungen der ersten Schwungmasse, die geschlossen oder als einseitig offene Axialprofilierungen ausgebildet sein können, radial durchgreifen. Hierzu kann jeweils eine Beaufschlagungseinrichtung in jeweils eine Ausnehmung eingefädelt werden, bevor das zugehörige Flanschsegment an der zweiten Schwungmasse befestigt wird. Infolgedessen kann eine Vielzahl von konstruktiven Ausbildungsformen vorgeschlagen werden, bei denen zumindest ein Scheibenteil axiale Bereiche beidseits der Flanschsegmente aufweist.

Beispielsweise kann gemäß einem vorteilhaften Ausführungsbeispiel ein erstes, auf der Antriebswelle der Antriebseinheit aufgenommenes Scheibenteil im Bereich der Ausnehmungen axial gekröpft sein. Ein derartig ausgebildetes Scheibenteil kann radial außen einen beispielsweise in Richtung der zweiten Schwungmasse angeformten, vorzugsweise ringförmigen axialen Ansatz aufweisen, auf dem ein Zahnkranz wie Anlasserzahnkranz zentriert aufgenommen sein kann. Dadurch kann ein Schwingungsdämpfer, beispielsweise ein Zweimassenschwungrad oder Zweimassendämpfer mit Flanschsegmenten und Scheibenteilen der ersten Schwungmasse vorgeschlagen werden, wobei der Zahnkranz sich auf demjenigen Scheibenteil abstützt, welches gleichzeitig die radiale Zentrierung des Schwingungsdämpfers gegenüber der Antriebswelle übernimmt, so dass der Zahnkranz einteilig gegenüber der Antriebswelle zentriert und damit besonders gute Rundlaufeigenschaften aufweist. Weiterhin ist die Anordnung des Zahnkranzes im Wesentlichen axial auf gleicher Höhe der zweiten Schwungmasse möglich. Unabhängig von der Befestigung eines Zahnkranzes kann die Anordnung der zweiten Schwungmasse radial innerhalb des axialen Ansatzes erfolgen, so dass der axiale Ansatz als axial erweiterte Masseanhäufung der ersten Schwungmasse über die zweite Schwungmasse hinaus vorgesehen sein kann.

Gemäß einem weiteren vorteilhaften Ausführungsbeispiel kann ein erstes Scheibenteil eine der zweiten Schwungmasse zugewandte Wandung und ein zweites Scheibenteil eine der Antriebseinheit zugewandte Wandung und mittels eines radial außen angeordneten Ansatzes eine radial äußere Wandung der Ringkammer bilden. Hierdurch wird durch eine entsprechende Kröpfung im Bereich des Durchgriffs der Beaufschlagungsbereiche der Flanschsegmente und Anlegen eines zusätzlichen Scheibenteils mit einem radial äußeren ringförmigen Ansatz die Ringkammer gebildet werden. Dabei können die beiden Scheibenteile benachbart zu einem Verschraubungskreis zur Befestigung der Schwingungseinrichtung an der Antriebswelle aneinander angelegt sein. Die Ausrichtung wie Positionierung der Scheibenteile und gegebenenfalls eine Zentrierung dieser aufeinander kann durch den Lochkreis der beiden Scheibenteile erfolgen, so dass weitere Zentriermittel an den Scheibenteilen eingespart werden können.

Es hat sich als vorteilhaft gezeigt, wenn die Scheibenteile radial außen miteinander dicht beispielsweise mittels eines Laserschweißverfahrens verschweißt sind. Dadurch kann auf gegenüber einer partiellen Verschweißung mit einer eingelegten Dichtung auf die Dichtung verzichtet werden, die entsprechende Vorrichtungen zu deren Aufnahme und Einhaltung der Dichtstrecke voraussetzt, die axialen und radialen Bauraum beanspruchen. Durch den Wegfall der Dichtung wird neben einer Teilreduzierung mit einer Verringerung der Produktionskosten ein axialer und radialer Bauraumgewinn erzielt, so dass die Energiespeicher bei radial vorgegebenem Bauraum radial nach außen verlagert und damit mit einer höheren Federkapazität versehen werden können.

Gemäß dem erfinderischen Gedanken werden die Scheibenteile mit einer unterschiedlichen Materialstärke ausgebildet, so dass je nach gewünschter Auslegung der axialen Steifigkeit des Schwingungsdämpfers entsprechende Materialstärken vorgesehen werden können. Beispielsweise kann mittels eines mit der Antriebswelle verbundenen, gekröpften Bauteils eine axial wenig elastische Anbindung eines Zahnkranzes direkt an die Antriebswelle erfolgen. Hierbei kann das zweite, mit dem ersten Scheibenteil die Ringkammer bildende Scheibenteil vergleichsweise dünn ausgelegt werden. Alternativ kann das mit der Antriebswelle verbundene Scheibenteil aus Material mit vergleichsweise geringer Stärke ausgelegt werden, so dass eine axiale Elastizität zwischen der Antriebswelle und der als Abtriebsteil des Schwingungsdämpfers zweiten Schwungmasse erzielt wird, die zumindest teilweise neben den Drehschwingungen auch Axial- und Taumelschwingungen der Antriebswelle isoliert werden können. Mit diesem Scheibenteil kann ein ringförmiges, der zweiten Schwungmasse zugewandtes Scheibenteil aus stärkerem Material vorgesehen sein, das einen axialen Bereich mit Ausnehmungen aufweist, den die Beaufschlagungseinrichtungen der Flanschsegmente durchgreifen und das mit dem anderen Scheibenteil die Ringkammer bildet.

Zur verbesserten Auswertung des eingesetzten Materials kann weiterhin vorgesehen werden, einen radial inneren Stanzausbruch eines ringförmigen Scheibenteils als Verstärkungsring oder Lagerflansch der ersten Schwungmasse auszubilden. Zur Ausbildung eines ringförmigen Ansatzes zur Aufnahme und Lagerung beispielsweise mittels eines Gleit- oder Wälzlagers kann der Stanzausbruch entsprechend umformend bearbeitet werden.

Die Erfindung wird anhand der in den Figuren 1 bis 8 dargestellten Ausführungsbeispiele näher erläutert. Dabei zeigen:
- Figur 1: eine geschnittene Ansicht eines Schwingungsdämpfers,
- Figur 2: einen Teilschnitt durch den Schwingungsdämpfer der Figur 1,
- Figur 3: einen Teilschnitt durch den Schwingungsdämpfer entlang einer gegenüber der Figur 2 geänderten Schnittlinie,
- Figur 4: einen Teilschnitt durch einen gegenüber den Figuren 1 bis 3 abgeänderten Schwingungsdämpfer mit einem mit der Antriebswelle verbundenen gekröpften Scheibenteil,
- Figur 5: einen Teilschnitt durch einen gegenüber den Schwingungsdämpfem der Figuren 1 bis 4 abgeänderten Schwingungsdämpfer mit einer axial elastischen Anbindung an die Antriebswelle,
- Figur 6: einen Teilschnitt durch einen Schwingungsdämpfer mit gegenüber dem Schwingungsdämpfer der Figur 4 verkürztem Scheibenteil,
- Figur 7: einen Teilschnitt durch einen Schwingungsdämpfer mit einem zweiteilig ausgebildeten Lagerflansch und
- Figur 8: einen Teilschnitt durch einen Schwingungsdämpfer mit einer topfförmigen Ausnehmung eines Scheibenteils zur Aufnahme der Energiespeicher.

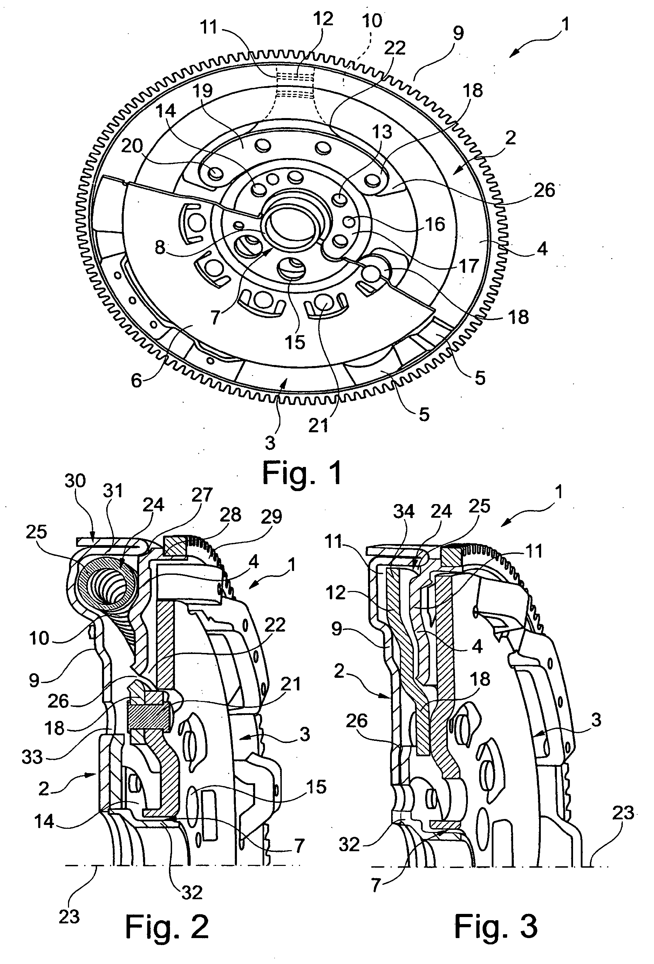

Figur 1 zeigt eine Ansicht des Schwingungsdämpfers 1 aus Sicht der zweiten Schwungmasse 3, die teilweise angeschnitten ist und den Einblick auf das Scheibenteil 4 der ersten Schwungmasse 2 freigibt. Die zweite Schwungmasse 3 bildet das Ausgangsteil des Schwingungsdämpfers 1 und weist hierzu entsprechende Aufnahmeelemente 5 - hier für eine Reibungskupplung - und eine Reibfläche 6 auf. Erste und zweite Schwungmasse 2, 3 sind gegeneinander verdrehbar mittels der Lagerung 7 - hier dem Gleitlager 8 - angeordnet. Die Verdrehung erfolgt entgegen der Wirkung der nicht einsehbaren, über den Umfang angeordneten und wirksamen Energiespeicher, die in der durch die Scheibenteile 4, 9 gebildeten, nicht einsehbaren Ringkammer 10 untergebracht sind.

Der Schwingungsdämpfer 1 ist mittels der Scheibenteile 4, 9 der ersten Schwungmasse 2 an einer Antriebswelle einer Antriebseinheit befestigt, beispielsweise auf einer Kurbelwelle einer Brennkraftmaschine aufgenommen. Hierzu weisen die Scheibenteile 4, 9 auf dem Verschraubungskreis 13 angeordnete Öffnungen 14 auf, durch die der Schwingungsdämpfer 1 mit der Antriebswelle verschraubt wird. Die zugehörigen Schrauben können durch die enger als die Schraubenköpfe der Schrauben ausgebildeten Montageöffnungen 15 in der zweiten Schwungmasse 3 verliergesichert aufgenommen sein. Während der Montage werden die beiden Scheibenteile 4, 9 bevorzugt mittels der Öffnungen 14 aufeinander positioniert und zentriert sowie mittels der zumindest einen aus dem Scheibenteil 9 ausgeformten Nietwarze 16 unter Zwischenlegung des Verstärkungsrings 17 aufeinander fixiert.

Bei einer Verdrehung der beiden Schwungmassen 2, 3 gegeneinander werden die - hier nicht einsehbaren - Energiespeicher in Umfangsrichtung komprimiert. Hierzu werden diese eingangsseitig von Einzügen 11 der beiden Scheibenteile 4, 9 und ausgangsseitig von den Beaufschlagungseinrichtungen 12 beaufschlagt. Die Beaufschlagungseinrichtungen 12 sind auf über den Umfang angeordneten Flanschsegmenten 18 aufgenommen. Die Flanschsegmente 18 weisen gegenüber den radial ausgerichteten Beaufschlagungseinrichtungen 12 beidseitig in Umfangsrichtung erweiterte Flügel 19 mit Öffnungen 20 auf, durch die die Flanschsegmente 18 mittels der Niete 21 mit der zweiten Schwungmasse 3 vernietet sind. Die Beaufschlagungseinrichtungen 12 durchgreifen Ausnehmungen 26 des Scheibenteils 4 in dem gekröpften Bereich 22 radial, eine Vernietung der Flanschsegmente 18 mit der zweiten Schwungmasse erfolgt daher erst nach dem Einbringen der Beaufschlagungseinrichtungen 12 in die Ringkammer 10. Dabei wird eine Baugruppe aus der ersten Schwungmasse 2 mit den eingelegten Flanschsegmenten 18 gebildet, die mit der zweiten Schwungmasse verbunden wird. Die Vemietung von Flanschsegmenten 18 und zweiter Schwungmasse 3 erfolgt nach Ausbildung der Lagerung 7. Zur Vernietung sind in den Scheibenteilen 4, 9 entsprechende - hier nicht einsehbare - Durchgriffsöffnungen vorgesehen. Die Aufteilung der Beaufschlagungseinrichtungen 12 auf mehrere Flanschsegmente 18 erlaubt zusätzlich zum Freiheitsgrad eines Durchgriffs der Beaufschlagungseinrichtungen radial durch das Scheibenteil 4 eine materialsparende Anordnung auf dem Bandmaterial, aus dem diese gestanzt werden. Im Weiteren können kleinere Härtungsvorrichtungen eingesetzt werden. Bei einer partiellen Härtung der Beaufschlagungsbereiche 12 können diese beispielsweise ohne Umlagerung mittels einer einzigen Härtevorrichtung, beispielsweise einer Induktionsschleife seriell gehärtet werden.

Figur 2 zeigt einen Teilschnitt der oberen Hälfte des um die Drehachse 23 verdrehbaren Schwingungsdämpfers 1 der Figur 1. Aus dem Teilschnitt wird die Anordnung der Energiespeicher 24 - hier Bogenfedern 25 - über den Umfang der durch die Scheibenteile 4, 9 der ersten Schwungmasse 2 gebildeten Ringkammer 10 deutlich. Zur Ausbildung der Dichtigkeit der Ringkammer 10 werden die beiden Scheibenteile 4, 9 bevorzugt mittels der dichten, vorzugsweise mittels eines Laserschweißverfahrens hergestellten Schweißnaht 27 verbunden.

Die axiale Steifigkeit und/oder das Trägheitsmoment des Schwingungsdämpfers 1 werden an die Erfordernisse durch Wahl der Blechstärken der Scheibenteile 4, 9 und gegebenenfalls durch zusätzliche Ausbrüche vorgesehen. In dem gezeigten Ausführungsbeispiel ist das Scheibenteil 4 aus stärkerem Material als das Scheibenteil 9 ausgebildet, so dass eine einteilige, axial feste Anbindung des auf dem axialen Ansatz 28 des Scheibenteils 4 angeordneten Zahnkranzes 29 wie Anlasserzahnkranz an der nicht dargestellten Antriebswelle erfolgt. Eine axiale Restelastizität kann beispielsweise durch die Ausdehnung der Ausnehmungen 26 insbesondere in Umfangsrichtung eingestellt werden.

Durch die einteilige Aufnahme des Zahnkranzes 29 an dem direkt mit der Antriebswelle verbundenen Scheibenteil 4 wird ein besonders guter Rundlauf und eine exakte Zentrierung des Zahnkranzes 29 gegenüber der Antriebswelle erzielt. Durch den die zweite Schwungmasse 3 axial übergreifenden Ansatz 28 und das im Bereich 22 gekröpfte Scheibenteil 4 ist eine Anordnung des Zahnkranzes 29 auf axialer Position der zweiten Schwungmasse 3 möglich, obwohl dieser einteilig an die Antriebswelle gekoppelt ist. Dies wiederum erfordert die Aufteilung der Beaufschlagungseinrichtungen 12 (Figur 1) auf mehrere Flanschsegmente 18, um diese durch die Ausnehmungen 26 des im Bereich 22 gekröpften Scheibenteils 4 fädeln und anschließend nach der Bildung einer Baugruppe aus den Scheibenteilen 4, 9, den Energiespeichern 24 und den Flanschsegmenten 18 mittels der Niete 21 mit der zweiten Schwungmasse 3 durch die Durchgriffsöffnungen 33 vernieten zu können. Die Befestigung des Schwingungsdämpfers 1 an der Antriebswelle erfolgt mittels nicht dargestellter, zwischen den Öffnungen 14 und den Montageöffnungen 15 der zweiten Schwungmasse 3 verliergesicherter Schrauben.

Die Einstellung eines zusätzlichen Trägheitsmoments erfolgt durch die Doppelung 30 des die Ringkammer 10 nach radial außen schließenden Ansatzes 31 des Scheibenteils 9, die zusätzlich zu einer Erhöhung der radialen Steifigkeit der unter Fliehkraft nach radial außen durch die Energiespeicher 24 belasteten Ringkammer 10 beiträgt.

Figur 3 zeigt den oberen Teil des um die Drehachse 23 an einer Antriebswelle angeordneten Schwingungsdämpfers 1 der Figuren 1 und 2 entlang eines Teilschnitts durch das Flanschsegment 18 mit der die Ausnehmung 26 des Scheibenteils 4 radial durchgreifenden Beaufschlagungseinrichtung 12. Diese bildet beidseitige Beaufschlagungsflächen 34, die die Energiespeicher 24 stirnseitig beaufschlagen. Eingangsseitig werden diese stirnseitig von den Einzügen 11 der Scheibenteile 4, 9 beaufschlagt. Die Energiespeicher 24 werden abhängig vom Verdrehwinkel zwischen den Schwungmassen 2, 3 dadurch komprimiert. Die Ausnehmungen 26 sind dabei in Umfangsrichtung bevorzugt zumindest in Höhe des Verdrehwinkels ausgeschnitten, so dass der maximale Verdrehwinkel ohne Berührung von Scheibenteil 4 und Beaufschlagungseinrichtung 12 erfolgt und zuvor die Energiespeicher 24 wie Bogenfedern 25 auf Block gehen.

In dem gezeigten Ausführungsbeispiel erfolgt die Lagerung 7 der zweiten Schwungmasse auf dem einteilig mit dem Scheibenteil 4 ausgebildeten Lagerflansch 32.

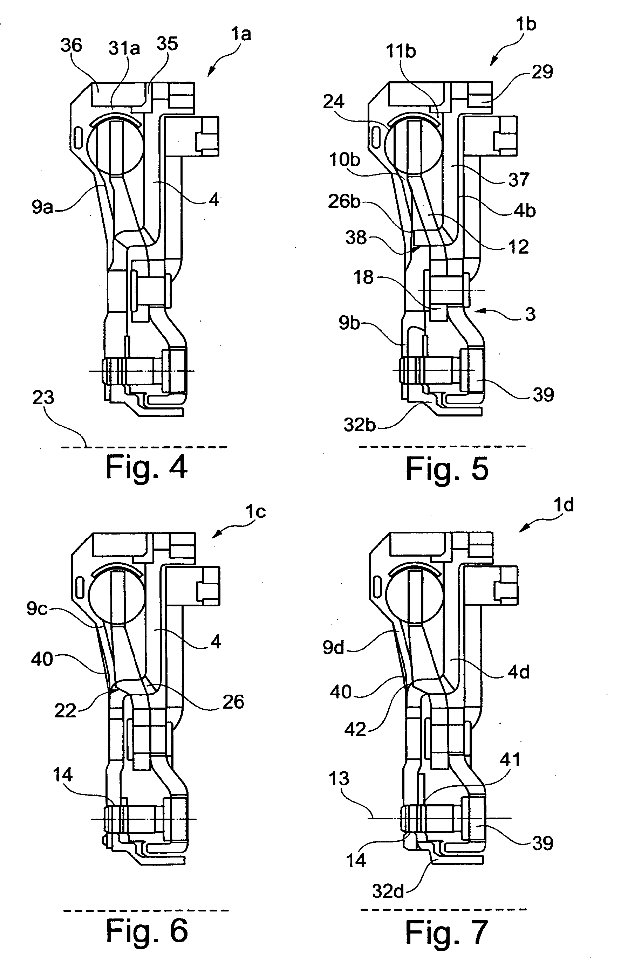

Figur 4 zeigt die obere Hälfte des um die Drehachse 23 angeordneten, dem Schwingungsdämpfer 1 der Figuren 1 bis 3 ähnlichen Schwingungsdämpfers 1a im Teilschnitt. Im Unterschied zu diesem ist bei im Wesentlichen gleichem Scheibenteil 4 das Scheibenteil 9a am Außenumfang ohne Doppelung mit dem einfachen axialen und ringförmigen Ansatz 31 a versehen, der den radial erweiterten Ringbord 35 aufweist, der als Anschlag für die auf dem Ansatz 31a aufgenommene Zusatzmasse dient. Anstatt der Zusatzmasse 36 kann in hybridischen Antriebssträngen ein Rotor einer Elektromaschine aufgenommen sein.

Figur 5 zeigt den Teilschnitt des gegenüber den Schwingungsdämpfern 1, 1a der Figuren 1 bis 4 bezüglich seiner axialen Steifigkeit geänderten Schwingungsdämpfers 1 b. Der Schwingungsdämpfer 1 b ist neben der Drehschwingungsisolation mittels der Energiespeicher 24 und gegebenenfalls zugeschalteter Reibeinrichtungen axial elastisch zur Isolation und Dämpfung von Axial- und Taumelschwingungen der Antriebswelle insbesondere einer Kurbelwelle einer Brennkraftmaschine ausgelegt. Hierzu ist das Scheibenteil 4b zweigeteilt in ein die Ringkammer 10b bildendes und den Zahnkranz 29 aufnehmendes Ringteil 37 und den Lagerflansch 32b, die bevorzugt aus derselben Ronde gestanzt und umformend bearbeitet sind, ausgebildet. Das Ringteil 37 enthält entsprechend dem Scheibenteil 4 der Figuren 1 bis 3 die Einzüge 11b zur Beaufschlagung der lediglich schematisch dargestellten Energiespeicher 24. Am Innenumfang ist anstatt geschlossener Ausnehmungen der axial angeformte Ansatz 38 mit einseitig offenen Ausnehmungen 26b vorgesehen, die von den Beaufschlagungseinrichtungen 12 der Flanschsegmente 18 radial durchgriffen werden.

Das mittels der Schrauben 39 an der Antriebswelle befestigte Scheibenteil 9b wird zusammen mit dem Lagerflansch 32b mittels der verliersicher von der zweiten Schwungmasse 3 gehaltenen Schrauben 39 an der Antriebswelle befestigt und ist radial außen mit dem ringförmigen Scheibenteil 4b verschweißt. Das aus dünnerem Material als das Scheibenteil 4b gefertigte Scheibenteil 9b bildet die axial elastische Verbindung des Scheibenteils 4b und der zweiten Schwungmasse 3 an die Antriebswelle und ist dem Steifigkeitsverhalten einer sogenannten Flexplate angepasst, die insbesondere aus Anbindungen von hydrodynamischen Drehmomentwandlern an Kurbelwellen von Brennkraftmaschinen bekannt ist.

Figur 6 zeigt in Abänderung zu dem Schwingungsdämpfer 1a der Figur 4 einen Teilschnitt des Schwingungsdämpfers 1c mit unverändertem Scheibenteil 4 und geändertem Scheibenteil 9c, das am Innenumfang 40 radial verkürzt ist und axial in den gekröpften Bereich 22 mit den Ausnehmungen 26 des Scheibenteils eingezogen ist, so dass der Innenumfang im Wesentlichen fluchtend zum radialen Verlauf des Scheibenteils 4 ausgehend von den Öffnungen 14 zur Aufnahme des Schwingungsdämpfers 1 c an der Antriebswelle und dem Bereich 22 ist. Der Schwingungsdämpfer 1c baut hierdurch insbesondere radial innen schmaler. Die axiale Steifigkeit des Schwingungsdämpfers 1c wird durch die Trennung des Scheibenteils 9c von dem radial inneren Bereich des Scheibenteils 4 verringert.

Figur 7 zeigt in Abänderung zum Schwingungsdämpfer 1c der Figur 6 den Schwingungsdämpfer 1d im Teilschnitt mit einem Scheibenteil 4d mit separat ausgebildetem Lagerflansch 32d, der mittels der angeordneten Schrauben 39 zusammen mit dem Scheibenteil 4d an der Antriebswelle befestigt wird. Die Positionierung und Zentrierung des Lagerflansches 32d gegenüber dem Scheibenteil 4d erfolgt mittels der auf dem Verschraubungskreis 13 angeordneten Öffnungen 14, 41 und einer entsprechenden Verliersicherung des Lagerflansches 32d auf dem Scheibenteil 4d, die beispielsweise mittels einer nicht dargestellten Nietwarze entsprechend der Nietwarze 16 der Figur 1 vorgesehen ist.

Der Lagerflansch 32d ist aus dünnerem Material als das Scheibenteil 4d ausgebildet und wird aus dem Stanzausbruch des Scheibenteils 9d ausgebildet, so dass der Schwingungsdämpfer 1d materialsparend gefertigt werden kann. Im weiteren Unterschied zu der Anordnung der Scheibenteile 4, 9c der Figur 6 ist an dem Scheibenteil 4d die umlaufende Sicke 42 eingebracht, in die der Innenumfang 40 des Scheibenteils 9d vorzugsweise mit Spiel zur Verhinderung von Reibmomenten mit Spiel angelegt ist.

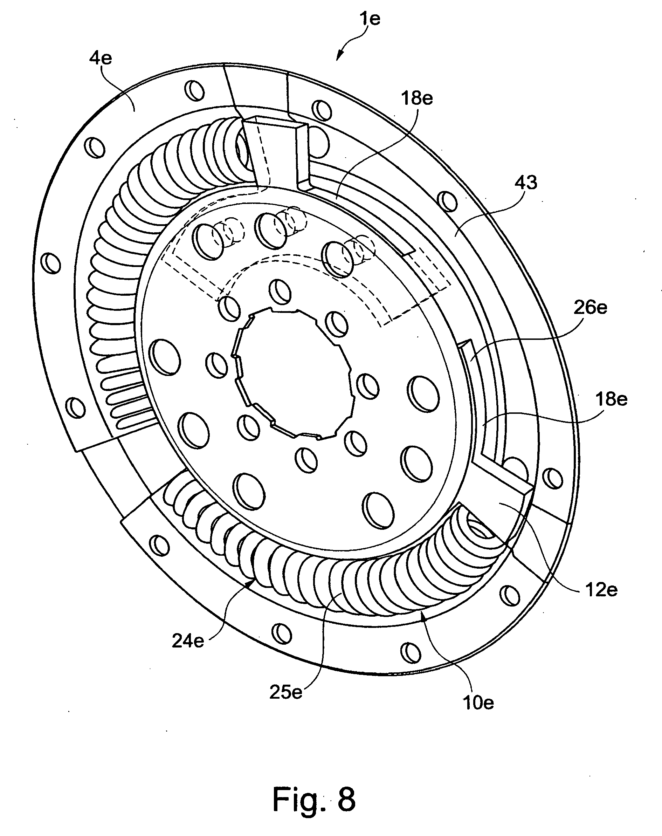

Figur 8 zeigt eine Weiterbildung der Schwingungsdämpfer 1 bis 1d der Figuren 1 bis 7 in Form des Schwingungsdämpfers 1e mit einer Dreierteilung der als Bogenfedern 25e ausgebildeten Energiespeicher 24e in Teilansicht, in der lediglich das Scheibenteil 4e der ersten Schwungmasse und die Flanschsegmente der zweiten Schwungmasse sowie ein Teil der Energiespeicher 24e dargestellt sind. Infolge der Dreierteilung werden drei über den Umfang verteilte Flanschsegmente 18e vorgesehen und mit der zweiten Schwungmasse verbunden wie vernietet. Das Scheibenteil 4e ist topfförmig ausgebildet, in dessen Topfboden 43 die Energiespeicher unter Bildung einer an drei Seiten geschlossenen Ringkammer 10e im Wesentlichen komplett aufgenommen werden. Durch die radial innere Wandung der Ringkammer 10e werden die radial an den Flanschsegmenten erweiterten Beaufschlagungseinrichtungen 12e durch die Ausnehmungen 26e gesteckt, bevor die Flanschsegmente 18e an der zweiten Schwungmasse befestigt werden. Durch die topfförmige Ausbildung des Scheibenteils 4e kann die Ringkammer 10e durch ein im Wesentlichen plan ausgebildetes, nicht dargestelltes Scheibenteil, beispielsweise einen ringförmigen Deckel geschlossenen werden. Das die Ringkammer 10e verschließende Scheibenteil kann zur Aufnahme eines Zahnkranzes, einer Zusatzmasse oder dergleichen einen axialen Ansatz aufweisen oder radial außen gefaltet sein. Im Übrigen kann der Aufbau des Schwingungsdämpfers 1 beispielsweise an den Aufbau der Schwingungsdämpfer 1 bis 1d der Figuren 1 bis 7 angelehnt sein.

### Bezugszeichenliste

- 1: Schwingungsdämpfer
- 1a: Schwingungsdämpfer
- 1b: Schwingungsdämpfer
- 1c: Schwingungsdämpfer
- 1d: Schwingungsdämpfer
- 1e: Schwingungsdämpfer
- 2: Schwungmasse
- 3: Schwungmasse
- 4: Scheibenteil
- 4b: Scheibenteil
- 4d: Scheibenteil
- 4e: Scheibenteil
- 5: Aufnahmeelement
- 6: Reibfläche
- 7: Lagerung
- 8: Gleitlager
- 9: Scheibenteil
- 9a: Scheibenteil
- 9b: Scheibenteil
- 9c: Scheibenteil
- 9d: Scheibenteil
- 10: Ringkammer
- 10b: Ringkammer
- 10e: Ringkammer
- 11: Einzug
- 11b: Einzug
- 12: Beaufschlagungseinrichtung
- 12e: Beaufschlagungseinrichtung
- 13: Verschraubungskreis
- 14: Öffnung
- 15: Montageöffnung
- 16: Nietwarze
- 17: Verstärkungsring
- 18: Flanschsegment
- 18e: Flanschsegment
- 19: Flügel
- 20: Öffnung
- 21: Niet
- 22: Bereich
- 23: Drehachse
- 24: Energiespeicher
- 24e: Energiespeicher
- 25: Bogenfeder
- 25e: Bogenfeder
- 26: Ausnehmung
- 26b: Ausnehmung
- 26e: Ausnehmung
- 27: Schweißnaht
- 28: Ansatz
- 29: Zahnkranz
- 30: Doppelung
- 31: Ansatz
- 31a: Ansatz
- 32: Lagerflansch
- 32b: Lagerflansch
- 32d: Lagerflansch
- 33: Durchgriffsöffnung
- 34: Beaufschlagungsfläche
- 35: Ringbord
- 36: Zusatzmasse
- 37: Ringteil
- 38: Ansatz
- 39: Schraube
- 40: Innenumfang
- 41: Öffnung
- 42: Sicke
- 43: Topfboden

## Patentansprüche

1. Schwingungsdämpfer (1, 1a, 1b, 1c, 1d, 1e), angeordnet an einer Antriebseinheit mit einer Antriebswelle, mit zwei entgegen der Wirkung mehrerer, über den Umfang angeordneter Energiespeicher (24, 24e) relativ verdrehbaren Schwungmassen (2, 3), wobei eine erste der Schwungmassen (2) mehrere, eine Ringkammer (10, 10e) zur Aufnahme der Energiespeicher (24, 24e) bildende, miteinander verbundene Scheibenteile (4, 4b, 4d, 4e; 9, 9a, 9b, 9c, 9d) und eine zweite der Schwungmassen (3) mehrere, von radial innen in die Ringkammer (10, 10e) eingreifende, in Umfangsrichtung auf die Energiespeicher (24, 24e) einwirkende Beaufschlagungseinrichtungen (12, 12e) aufweist, wobei jeweils eine Beaufschlagungseinrichtung (12, 12e) aus einem von mehreren über den Umfang verteilten und auf der zweiten Schwungmasse (3) aufgenommenen Flanschsegmenten (18, 18e) gebildet ist,
**dadurch gekennzeichnet, dass**
die Beaufschlagungseinrichtungen (12, 12e) jeweils einen im Wesentlichen axial ausgerichteten, Ausnehmungen (26, 26b, 26e) aufweisenden Bereich (22) eines Scheibenteils (4, 4b, 4d, 4e) der ersten Schwungmasse (2) radial durchgreifen.

2. Schwingungsdämpfer (1, 1a, 1b, 1c, 1d) nach Anspruch 1, **dadurch gekennzeichnet, dass** ein erstes, auf der Antriebswelle der Antriebseinheit aufgenommenes Scheibenteil (4, 4b, 4d) im Bereich der Ausnehmungen (26, 26b) axial gekröpft ist.

3. Schwingungsdämpfer (1, 1a, 1b, 1c, 1d) nach Anspruch 2, **dadurch gekennzeichnet, dass** die zweite Schwungmasse (3) radial innerhalb eines an dem gekröpften Scheibenteil (4, 4b, 4d) radial außen angeordneten axialen Ansatzes (28) angeordnet ist.

4. Schwingungsdämpfer (1, 1a, 1b, 1c, 1d) nach einem der Ansprüche 1 bis 3, **dadurch gekennzeichnet, dass** ein erstes Scheibenteil (4, 4b, 4d) eine der zweiten Schwungmasse zugewandte Wandung und ein zweites Scheibenteil (9, 9a, 9b, 9c, 9d) eine der Antriebseinheit zugewandte Wandung und mittels eines radial außen angeordneten Ansatzes (31, 31a) eine radial äußere Wandung der Ringkammer (10) bildet.

5. Schwingungsdämpfer (1, 1a) nach Anspruch 4, **dadurch gekennzeichnet, dass** die beiden Scheibenteile (4, 9, 9a) benachbart zu einem Verschraubungskreis (13) zur Befestigung der Schwingungseinrichtung (1, 1a) an der Antriebswelle aneinander angelegt sind.

6. Schwingungsdämpfer (1, 1a, 1b, 1c, 1d, 1e) nach einem der Ansprüche 1 bis 5, **dadurch gekennzeichnet, dass** die Scheibenteile (4, 4b, 4d, 4e; 9a, 9b, 9c, 9d) radial außen miteinander dicht verschweißt sind.

7. Schwingungsdämpfer (1, 1a, 1b, 1c, 1d) nach einem der Ansprüche 1 bis 6, **dadurch gekennzeichnet, dass** die Scheibenteile (4, 4b, 4d; 9a, 9b, 9c, 9d) eine unterschiedliche Materialstärke aufweisen.

8. Schwingungsdämpfer (1b, 1 d) nach einem der Ansprüche 1 bis 7, **dadurch gekennzeichnet, dass** ein radial innerer Stanzausbruch eines Scheibenteils (4b; 9d) als Verstärkungsring oder Lagerflansch (32b, 32d) der ersten Schwungmasse (2) ausgebildet ist.

9. Schwingungsdämpfer (1, 1a, 1c, 1d) nach einem der Ansprüche 1 bis 8, **dadurch gekennzeichnet, dass** ein radial außen am Schwingungsdämpfer (1, 1a, 1c, 1d) aufgenommener und im Wesentlichen axial auf gleicher Höhe der zweiten Schwungmasse (3) angeordneter Zahnkranz (29) mittels eines einteiligen Scheibenteils (4, 4d) auf der Antriebswelle zentriert ist.

## Claims

1. Vibration damper (1, 1a, 1b, 1c, 1d, 1e), arranged on a drive unit having a drive shaft, with two flywheel masses (2, 3) relatively rotatable counter to the action of a plurality of energy accumulators (24, 24e) arranged over the circumference, a first of the flywheel masses (2) having a plurality of interconnected disc parts (4, 4b, 4d, 4e; 9, 9a, 9b, 9c, 9d) which form an annular chamber (10, 10e) for accommodating the energy accumulators (24, 24e), and a second of the flywheel masses (3) having a plurality of impinging devices (12, 12e) engaging radially from inside into the annular chamber (10, 10e) and acting upon the energy accumulators (24, 24e) in the circumferential direction, in each case an impinging device (12, 12e) being formed from one of a plurality of flange segments (18, 18e) distributed over the circumference and accommodated on the second flywheel mass (3), **characterized in that** the impinging devices (12, 12e) in each case pass radially through an essentially axially oriented region (22), having recesses (26, 26b, 26e), of a disc part (4, 4b, 4d, 4e) of the first flywheel mass (2).

2. Vibration damper (1, 1a, 1b, 1c, 1d) according to Claim 1, **characterized in that** a first disc part (4, 4b, 4d) accommodated on the drive shaft of the drive unit is bent axially in the region of the recesses (26, 26b).

3. Vibration damper (1, 1a, 1b, 1c, 1d) according to Claim 2, **characterized in that** the second flywheel mass (3) is arranged radially within an axial extension (28) arranged radially on the outside on the bent disc part (4, 4b, 4d).

4. Vibration damper (1, 1a, 1b, 1c, 1d) according to one of Claims 1 to 3, **characterized in that** a first disc part (4, 4b, 4d) forms a wall facing the second flywheel mass, and a second disc part (9, 9a, 9b, 9c, 9d) forms a wall facing the drive unit and, by means of an extension (31, 31a) arranged radially on the outside, a radially outer wall of the annular chamber (10).

5. Vibration damper (1, 1a) according to Claim 4, **characterized in that** the two disc parts (4, 9, 9a) are laid one against the other adjacently to a screwconnection circle (13) for fastening the vibration damper (1, 1a) on the drive shaft.

6. Vibration damper (1, 1a, 1b, 1c, 1d, 1e) according to one of Claims 1 to 5, **characterized in that** the disc parts (4, 4b, 4d, 4e; 9a, 9b, 9c, 9d) are welded sealingly to one another radially on the outside.

7. Vibration damper (1, 1a, 1b, 1c, 1d) according to one of Claims 1 to 6, **characterized in that** the disc parts (4, 4b, 4d; 9a, 9c, 9d) have a different material thickness.

8. Vibration damper (1b, 1d) according to one of Claims 1 to 7, **characterized in that** a radially inner stamped protrusion of a disc part (4b; 9d) is designed as a reinforcing ring or bearing flange (32b, 32d) of the first flywheel mass (2).

9. Vibration damper (1, 1a, 1c, 1d) according to one of Claims 1 to 8, **characterized in that** a toothed rim (29) accommodated radially on the outside on the vibration damper (1, 1a, 1c, 1d) and arranged essentially axially level with the second flywheel mass (3) is centred on the drive shaft by means of a one-part disc part (4, 4d).

## Revendications

1. Amortisseur de vibrations (1, 1a, 1b, 1c, 1d, 1e), disposé au niveau d'une unité d'entraînement comprenant un arbre d'entraînement, avec deux masses d'inertie (2, 3) pouvant tourner l'une par rapport à l'autre à l'encontre de l'action de plusieurs accumulateurs d'énergie (24, 24e) disposés sur la périphérie, une première des masses d'inertie (2) présentant plusieurs parties de disque (4, 4b, 4d, 4e ; 9, 9a, 9b, 9c, 9d) connectées les unes aux autres, formant une chambre annulaire (10, 10e) pour recevoir les accumulateurs d'énergie (24, 24e), et une deuxième des masses d'inertie (3) présentant plusieurs dispositifs de précontrainte (12, 12e) venant en prise depuis l'intérieur radialement dans la chambre annulaire (10, 10e), agissant dans la direction périphérique sur les accumulateurs d'énergie (24, 24e), à chaque fois un dispositif de précontrainte (12, 12e) étant formé d'un parmi plusieurs segments de bride (18, 18e) répartis sur la périphérie et reçus sur la deuxième masse d'inertie (3),
**caractérisé en ce que** les dispositifs de précontrainte (12, 12e) viennent en prise radialement à chaque fois à travers une région (22) orientée essentiellement axialement présentant des évidements (26, 26b, 26e) d'une partie de disque (4, 4b, 4d, 4e) de la première masse d'inertie (2).

2. Amortisseur de vibrations (1, 1a, 1b, 1c, 1d) selon la revendication 1, **caractérisé en ce qu'**une première partie de disque (4, 4b, 4d) reçue sur l'arbre d'entraînement de l'unité d'entraînement est coudée axialement dans la région des évidements (26, 26b).

3. Amortisseur de vibrations (1, 1a, 1b, 1c, 1d) selon la revendication 2, **caractérisé en ce que** la deuxième masse d'inertie (3) est disposée radialement à l'intérieur d'un insert (28) axial disposé radialement à l'extérieur sur la partie de disque coudée (4, 4b, 4d).

4. Amortisseur de vibrations (1, 1a, 1b, 1c, 1d) selon l'une quelconque des revendications 1 à 3, **caractérisé en ce qu'**une première partie de disque (4, 4b, 4d) forme une paroi tournée vers la deuxième masse d'inertie et une deuxième partie de disque (9, 9a, 9b, 9c, 9d) forme une paroi tournée vers l'unité d'entraînement et, au moyen d'un insert disposé radialement à l'extérieur (31, 31a), forme une paroi radialement extérieure de la chambre annulaire (10).

5. Amortisseur de vibrations (1, 1a) selon la revendication 4, **caractérisé en ce que** les deux parties de disque (4, 9, 9a) sont placées l'une contre l'autre en position adjacente à un cercle de vissage (13) pour la fixation de l'amortisseur de vibrations (1, 1a) à l'arbre d'entraînement.

6. Amortisseur de vibrations (1, 1a, 1b, 1c, 1d, 1e) selon l'une quelconque des revendications 1 à 5, **caractérisé en ce que** les parties de disque (4, 4b, 4d, 4e ; 9a, 9b, 9c, 9d) sont soudées de manière hermétique les unes aux autres radialement à l'extérieur.

7. Amortisseur de vibrations (1, 1a, 1b, 1c, 1d) selon l'une quelconque des revendications 1 à 6, **caractérisé en ce que** les parties de disque (4, 4b, 4d ; 9a, 9b, 9c, 9d) présentent une épaisseur de matériau différente.

8. Amortisseur de vibrations (1b, 1d) selon l'une quelconque des revendications 1 à 7, **caractérisé en ce qu'**un orifice estampé radialement interne d'une partie de disque (4b ; 9d) est réalisé sous forme de bague de renforcement ou de bride de palier (32b, 32d) de la première masse d'inertie (2).

9. Amortisseur de vibrations (1, 1a, 1c, 1d) selon l'une quelconque des revendications 1 à 8, **caractérisé en ce qu'**une couronne dentée (29) reçue radialement à l'extérieur sur l'amortisseur de vibrations (1, 1a, 1c, 1d) et disposée essentiellement axialement à la même hauteur que la deuxième masse d'inertie (3) est centrée au moyen d'une partie de disque d'une seule pièce (4, 4d) sur l'arbre d'entraînement.
